# FASCICULE DE BREVET EUROPEEN

(11) **EP 3 448 694 B1**
(45) Date de publication et mention de la délivrance du brevet: **03.08.2022**
(21) Numéro de dépôt: 17717781.3
(22) Date de dépôt: 22.03.2017
(51) Int. Cl.: B60B 3/04, B21D 53/26, B23K 11/02, B60B 23/08, F16B 5/08

(54) **ROUE DE VEHICULE AUTOMOBILE COMPORTANT UNE JANTE EN ALUMINIUM ET UN VOILE EN ACIER ASSEMBLÉS PAR PIONS SOUDES**
KRAFTFAHRZEUGRAD MIT EINER FELGE AUS ALUMINIUM UND EINER SCHEIBE AUS STAHL, DIE DURCH GESCHWEISSTE STIFTE ZUSAMMENGEFÜGT SIND
MOTOR VEHICLE WHEEL HAVING AN ALUMINIUM RIM AND A STEEL WHEEL DISC JOINED TOGETHER BY WELDED PINS

(30) Priorité: 25.04.2016 FR 1653617
(43) Date de publication de la demande: 06.03.2019
(73) Titulaire: PSA Automobiles SA, 78300 Poissy (FR); Magnetto Wheels France, 02700 Tergnier (FR)
(72) Inventeur: PALPACUER, Eric, 75013 Paris (FR); LENOIR, Romaric, 78560 Le Port Marly (FR); FEINER, David, 95120 Ermont (FR); LETY, Thomas, 91190 Gif Sur Yvette (FR)
(86) Numéro de dépôt international: PCT/FR2017/050666
(87) Numéro de publication internationale: WO 2017/187036

(56) Documents cités:
- WO-A1-2014/029665
- WO-A1-2015/082790
- DE-A1-102011 118 835
- GB-A- 1 316 954

## Description

La présente invention concerne une roue de véhicule automobile comportant une jante en aluminium et un voile en acier, elle concerne aussi un procédé de fabrication de cette roue, ainsi qu'un véhicule équipé de telles roues.

Un type de roue connu pour véhicule automobile comporte un voile formé dans une tôle emboutie, recevant sur sa périphérie une jante formant un profil circulaire de section constante. La roue assemblée subit ensuite un traitement final comme un revêtement de protection, et reçoit enfin sur sa jante un pneumatique afin de former une roue complète prête à être installée dans le véhicule.

Dans le cas d'un voile et d'une jante réalisés en tôle d'acier, il est connu d'assembler ces deux éléments par un centrage, puis par une soudure. Ce type de fabrication utilisant une technologie largement répandue et bien maîtrisée, permet de réaliser une roue présentant un coût limité, mais comportant une masse assez importante, que l'on veut réduire pour diminuer la consommation du véhicule et les émissions de gaz polluants.

Dans le cas d'une roue réalisée en tôle d'alliage d'aluminium, appelée par la suite tôle d'aluminium, on fabrique un voile et une jante présentant des formes équivalentes à celles de la roue en acier, qui sont ensuite assemblés par une soudure du type « MIG » (abréviation des termes anglais « Métal Inert Gas », pour métal sous gaz inerte). La roue en tôle d'aluminium présente une masse réduite d'environ 2kg par rapport à la roue en tôle d'acier.

Cependant ce type de roue réalisé en tôles d'aluminium assemblées par une soudure, présente un prix de revient relativement élevé.

Un autre type de roue connu, présenté notamment par le document FR-A1-2994668, comporte un voile réalisé en tôle d'acier et une jante en tôle d'aluminium qui sont d'abord assemblés par frettage pour réaliser un positionnement, puis rigidement fixés ensemble par un cordon de soudure du type « MIG / CMT » (abréviation des termes anglais « Cold Metal Transfer », pour transfert de métal à froid).

Cette soudure réalise une fusion simultanée d'un matériau d'apport aluminium avec le matériau de base aluminium, pour mouiller l'acier qui est revêtu de zinc afin de garantir la tenue du soudo-brasage. En particulier le revêtement de zinc peut être obtenu par dépôt électrolytique ou par galvanisation à chaud.

On obtient une roue présentant un poids réduit d'environ 1,3kg par rapport à une roue entièrement en tôle d'acier. Cependant le soudo-brasage de la jante en aluminium sur le voile en acier nécessite une préparation de ces composants qui entraînent des coûts relativement élevés.

Un autre type de roue connu, présenté notamment par le document GB 1316954, comporte un assemblage de la jante en tôle d'aluminium sur le voile en tôle d'acier par pions soudés sur la jante.

Par ailleurs un autre type de roue connu, présenté notamment par le document EP-B1-1415737, comporte un assemblage de la jante en tôle d'aluminium sur le voile en tôle d'acier par un système de clinchage qui relie ces deux tôles superposées.

Le clinchage comporte l'application d'un poinçon qui descend dans les deux tôles superposées en les déformant sans les percer. Un bossage de la tôle du dessus pénètre dans un creux de la tôle du dessous prenant une forme en contre-dépouille, afin de s'incruster dans ce creux pour former un verrouillage axial.

On obtient un assemblage mécanique des deux pièces entre elles, qui est toutefois délicat à réaliser en assurant un niveau de garantie élevé pour des roues qui sont des éléments de sécurité dans le véhicule.

La présente invention a notamment pour but d'éviter ces inconvénients de la technique antérieure.

Elle propose à cet effet une roue prévue pour un véhicule automobile, comportant une jante réalisée dans une tôle en alliage d'aluminium, fixée sur le contour d'un voile réalisé dans une tôle d'acier, par des assemblages reliant la tôle d'aluminium de la jante et la tôle d'acier du voile qui se superposent, cette roue étant remarquable en ce que les assemblages comportent des pions de liaison présentant une pointe traversant un perçage de la tôle d'aluminium de la jante, dont l'extrémité avant est soudée sur la tôle d'acier du voile, et une tête arrière prenant appui sur la tôle d'aluminium autour de ce perçage.

Un avantage de cette roue est que les pions de liaison peuvent être installés de manière simple et rapide dans une opération unique comprenant une rotation du pion, avec une pression sur la tôle d'aluminium permettant à la pointe de percer l'alliage d'aluminium, puis avec une friction de cette pointe sur la tôle d'acier réalisant un échauffement et une soudure de la pointe sur la tôle.

La tête arrière du pion prenant appui sur un bourrelet formé autour du perçage de la tôle d'aluminium par un refoulement de matière, on obtient un pion serrant de manière efficace la tôle d'aluminium sur celle en acier.

On réalise de cette manière une roue comportant une masse nettement réduite par rapport à une roue formée uniquement de tôles d'acier, et un prix de revient faiblement augmenté.

La roue selon l'invention peut comporter de plus une ou plusieurs des caractéristiques suivantes, qui peuvent être combinées entre elles.

Avantageusement, la tête des pions comporte sur son contour des encoches permettant son entraînement en rotation.

Dans ce cas, les encoches comportent avantageusement des formes permettant un entraînement par un outil dans un seul sens de rotation.

Avantageusement, l'extrémité des pointes des pions est bombée.

Avantageusement, la tôle d'aluminium forme autour de la pointe du pion un bourrelet circulaire dépassant au-dessus de cette tôle.

Dans ce cas, la tête du pion peut comporter en dessous un creux annulaire dans lequel est ajusté le bourrelet circulaire.

En particulier, la roue peut comporter des ensembles formés chacun par une paire de pions rapprochés l'un de l'autre, ces ensembles étant répartis de manière régulière sur le contour de la roue.

La tôle d'aluminium de la jante recevant le voile peut former un fond de jante cylindrique présentant le plus petit diamètre de la jante.

L'invention a aussi pour objet un procédé de fabrication d'une roue pour un véhicule automobile, comportant une jante réalisée dans une tôle en alliage d'aluminium, fixée sur le contour d'un voile réalisé dans une tôle d'acier, par des assemblages reliant les deux tôles qui se superposent, ce procédé présentant un cycle comportant différentes pressions et vitesses de rotation d'un pion en acier, comprenant dans une première étape le pressage d'une pointe avant de ce pion sur la tôle d'aluminium pour transpercer cette tôle, dans une étape suivante le pressage de la pointe avant sur la tôle d'acier du voile pour réaliser une déformation plastique de cette tôle s'adaptant à la forme d'extrémité de cette pointe, et dans une étape suivante la soudure par friction de la pointe du pion sur la tôle d'acier du voile.

L'invention a aussi pour objet un véhicule automobile comportant des roues comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente successivement une roue assemblée suivant l'invention, puis le détail de la jante et du voile de cette roue ;
- les figures 2 et 3 présentent cette roue vue respectivement de côté et de face ;
- la figure 4 présente cette roue suivant le plan de coupe IV-IV ;
- la figure 5 présente un pion de l'assemblage de cette roue ; et
- la figure 6 est une vue de détail de l'assemblage de cette roue suivant le plan de coupe VI-VI.

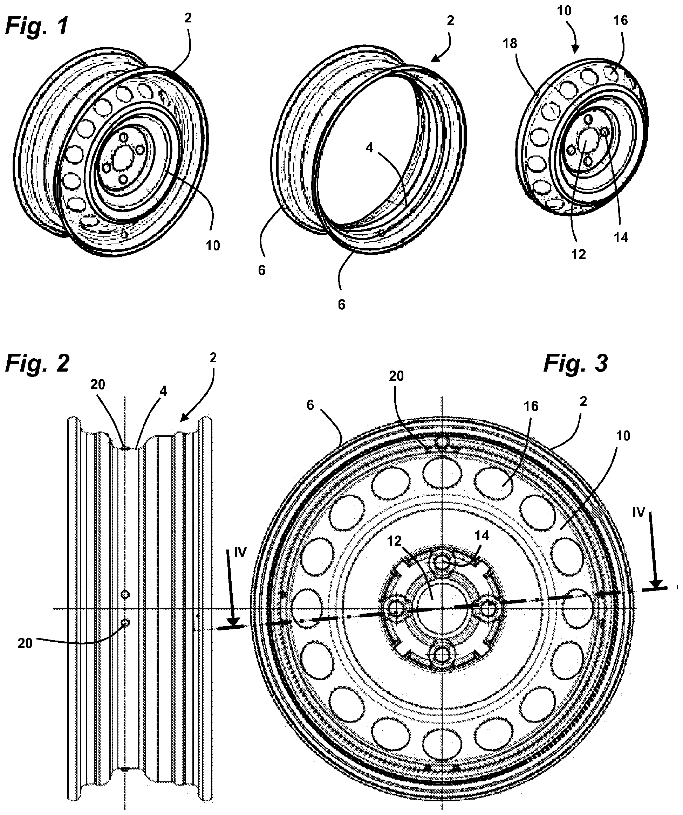

La figure 1 présente une roue comportant une jante 2 formée dans une tôle en aluminium, présentant un profil circulaire comprenant deux rebords latéraux 6 prévus pour encadrer un pneumatique. La jante 2 présente entre les deux rebords 6 un fond de jante 4, formant la partie cylindrique comportant le plus petit diamètre.

Un voile 10 formé dans une tôle en acier comporte un perçage central de centrage 12, entouré par quatre perçages 14 prévus pour recevoir des goujons de fixation de la roue sur le moyeu du véhicule.

Le voile 10 comporte vers l'extérieur une rangée de perçages 16 réalisant un allégement, puis la tôle présente un contour extérieur 18 formant une partie cylindrique tournée vers le véhicule, prévue pour s'ajuster avec un serrage dans le fond de jante 4 de la jante 2 afin de réaliser un centrage de cette jante.

Les figures 2, 3 et 4 présentent le voile 10 maintenu fixé dans la jante 2 par quatre ensembles de couple de pions 20, répartis régulièrement autour de la roue dans un même plan transversal, comportant chacune deux pions disposés l'un près de l'autre.

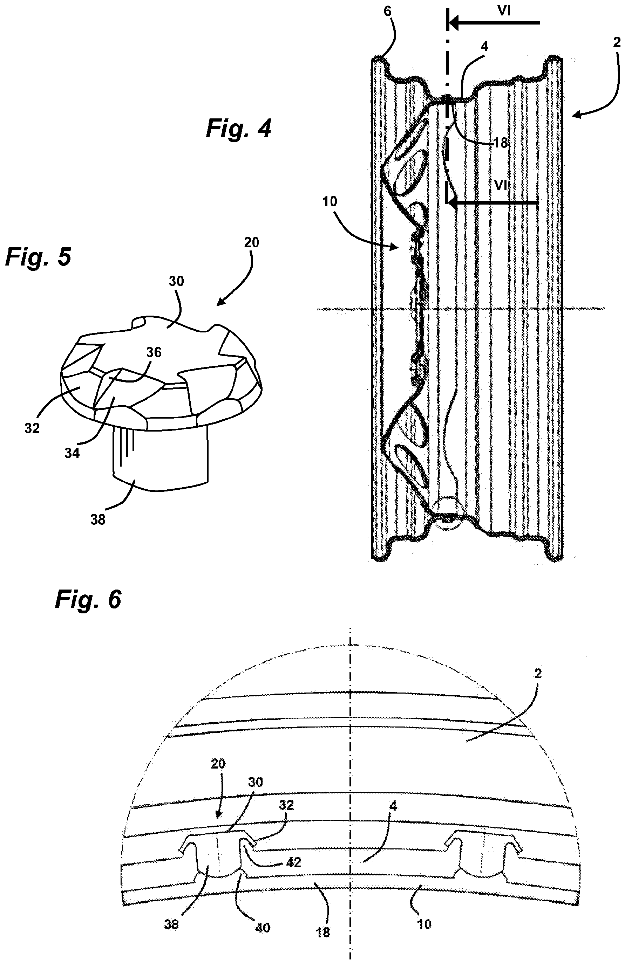

La figure 5 détaille un pion 20 en acier, comportant une pointe 38 se terminant en dessous par une forme bombée, et une tête 30 dont le dessus plat présente sur son contour un chanfrein conique 32.

Le contour de la tête du pion 30 comporte six encoches 34 formant chacune une facette inclinée vers le bas, qui se termine dans le sens de rotation horaire par une face perpendiculaire 36 disposée dans un plan axial. De cette manière un outil présentant une forme correspondant aux encoches 34, peut entraîner le pion 20 en rotation dans le sens horaire en prenant appui sur les faces perpendiculaires 36.

A l'inverse une rotation de l'outil dans le sens inverse n'entraîne pas le pion 20. De cette manière une arrivée de l'outil sur la tête du pion 30 et un début de rotation positionne facilement les crans de cet outil dans les encoches 34.

La figure 6 présente un couple de pions 20 comportant chacun la pointe 38 qui traverse la tôle en aluminium du fond de jante 4, son extrémité étant ajustée et soudée sur un creux correspondant formé sur un bossage 40 du contour du voile 18.

La tête du pion 30 constitue une collerette en appui sur un bourrelet circulaire 42 formé au-dessus du fond de jante 4, qui entoure la pointe 38 du pion 20, et rentre dans un creux annulaire formé en dessous de cette tête.

La mise en place du pion 20 se fait de la manière suivante. Dans une première étape avec une presse enserrant les deux tôles superposées du fond de jante 4 et du contour du voile 18, on applique une pression importante sur le pion 2 et une rotation par les échancrures 34, pour avec sa pointe 30 percer la tôle d'alliage d'aluminium du fond de jante 4. Ce perçage provoque un refoulement de la matière du fond de jante 4 vers le haut, formant le bourrelet circulaire 42 autour de la pointe 38.

Dans une deuxième étape une rotation sur le pion 20 applique une pression de l'extrémité de sa pointe 38 sur le contour du voile 18 en acier, afin de réaliser un nettoyage et une activation de ces deux surfaces en contact.

Dans une troisième étape la rotation du pion 20 continue, réalisant une déformation plastique de la tôle du contour du voile 18, qui forme un creux correspondant à l'extrémité bombée de la pointe 38 de ce pion, et autour le bossage 40 par refoulement de matière.

Dans une quatrième étape on réalise une rotation du pion 20 avec une pression élevée de manière à obtenir un échauffement important de son extrémité et de la tôle du contour du voile 18 en contact, et un joint de soudure entre ces éléments. En même temps la descente finale du pion 20 provoque une conformation du bourrelet circulaire 42 du fond de jante 4, qui rentre dans le creux annulaire formé en dessous de la tête 30 de ce pion.

De cette manière on obtient un serrage efficace du fond de jante 4 sur la tôle du contour du voile 18, par le serrage axial de la tête du pion 30 sur le bourrelet circulaire 42 de cette jante.

On notera que ce procédé de fixation est simple et rapide à mettre en œuvre, ne nécessitant pas de perçage pilote préalable de la jante 2, ni de traitement préalable ou postérieur des tôles après cette opération. En pratique on réalise chaque pose de pion en une seule opération, par une presse comportant un cycle de pressions et de vitesses de rotation réalisant automatiquement les différentes étapes du procédé. On effectue ainsi de manière économique une fixation sécuritaire nécessaire pour les roues.

Pour une roue de 16 pouces, on obtient avec la jante en alliage d'aluminium un gain d'environ 1,3kg par roue, soit 5,2kg pour le véhicule complet. Cette réduction de masse du véhicule contribue à une diminution de la consommation de carburant et des émissions de gaz polluants.

On peut avec ce même procédé assembler des tôles de différentes épaisseurs. En particulier pour une roue de petit diamètre, on peut poser un minimum de trois pions 20 disposés en triangle, afin d'assurer la liaison entre le voile et la jante.

## Revendications

1. - Roue prévue pour un véhicule automobile, comportant une jante (2) réalisée dans une tôle en alliage d'aluminium, fixée sur le contour d'un voile (10) réalisé dans une tôle d'acier, par des assemblages reliant la tôle d'aluminium de la jante (4) et la tôle d'acier du voile (18) qui se superposent, **caractérisée en ce que** les assemblages comportent des pions (20) de liaison présentant une pointe (38) traversant un perçage de la tôle d'aluminium (4) de la jante (2), dont l'extrémité avant est soudée sur la tôle d'acier du voile (18), et une tête arrière (30) prenant appui sur la tôle d'aluminium (4) autour de ce perçage.

2. - Roue selon la revendication 1, **caractérisée en ce que** la tête des pions (30) comporte sur son contour des encoches (34) permettant son entraînement en rotation.

3. - Roue selon la revendication 2, **caractérisée en ce que** les encoches (34) comportent des formes (36) permettant un entraînement par un outil dans un seul sens de rotation.

4. - Roue selon l'une quelconque des revendications précédentes, **caractérisée en ce que** l'extrémité des pointes des pions (38) est bombée.

5. - Roue selon l'une quelconque des revendications précédentes, **caractérisée en ce que** la tôle d'aluminium (4) forme autour de la pointe du pion (38), un bourrelet circulaire (42) dépassant au-dessus de cette tôle.

6. - Roue selon la revendication 5, **caractérisée en ce que** la tête du pion (30) comporte en dessous un creux annulaire dans lequel est ajusté le bourrelet circulaire (42).

7. - Roue selon l'une quelconque des revendications précédentes, **caractérisée en ce qu'**elle comporte des ensembles formés chacun par une paire de pions (20) rapprochés l'un de l'autre, ces ensembles étant répartis de manière régulière sur le contour de la roue.

8. - Roue selon l'une quelconque des revendications précédentes, **caractérisée en ce que** la tôle d'aluminium (4) de la jante (2) recevant la fixation du voile (10), forme un fond de jante cylindrique présentant le plus petit diamètre de la jante.

9. - Procédé de fabrication d'une roue pour un véhicule automobile, comportant une jante (2) réalisée dans une tôle en alliage d'aluminium, fixée sur le contour d'un voile (10) réalisé dans une tôle d'acier, par des assemblages reliant les deux tôles (4, 18) qui se superposent, **caractérisé en ce qu'**avec un cycle comportant différentes pressions et vitesses de rotation d'un pion en acier (20), dans une première étape on presse une pointe avant (38) de ce pion (20) sur la tôle d'aluminium (4) pour transpercer cette tôle, dans une étape suivante on presse la pointe avant (38) sur la tôle d'acier du voile (18) pour réaliser une déformation plastique de cette tôle s'adaptant à la forme d'extrémité de cette pointe, et dans une étape suivante on soude par friction la pointe du pion (38) sur la tôle d'acier du voile (18).

10. - Véhicule automobile comportant des roues, **caractérisé en ce que** ces roues sont selon l'une quelconque des revendications 1 à 8.

## Patentansprüche

1. Rad, das für ein Kraftfahrzeug vorgesehen ist, umfassend eine in einem Aluminiumlegierungsblech hergestellte Felge (2), die am Umfang eines in einem Stahlblech hergestellten Kranzes (10) über Montagen befestigt ist, die das Aluminiumblech der Felge (4) und das Stahlblech des Kranzes (18) verbinden, die sich überlagern, **dadurch gekennzeichnet, dass** die Montagen Verbindungsstifte (20) umfassen, die eine Spitze (38) aufweisen, die eine Durchbohrung des Aluminiumblechs (4) der Felge (2) durchquert, deren vorderes Ende auf das Stahlblech des Kranzes (18) geschweißt ist, und einen Hinterkopf (30), der auf dem Aluminiumblech (4) um die Durchbohrung herum aufliegt.

2. Rad nach Anspruch 1, **dadurch gekennzeichnet, dass** der Kopf der Stifte (30) an seinem Umfang Einkerbungen (34) umfasst, die erlauben, dass dieser in Drehung versetzt wird.

3. Rad nach Anspruch 2, **dadurch gekennzeichnet, dass** die Einkerbungen (34) Formen (36) aufweisen, die ein Antreiben durch ein Werkzeug in einer einzigen Drehrichtung erlauben.

4. Rad nach einem der vorstehenden Ansprüche, **dadurch gekennzeichnet, dass** das Ende der Spitzen der Stifte (38) gewölbt ist.

5. Rad nach einem der vorstehenden Ansprüche, **dadurch gekennzeichnet, dass** das Aluminiumblech (4) um die Spitze des Stifts (38) herum einen kreisförmigen Wulst (42) bildet, der über dieses Blech hinausragt.

6. Rad nach Anspruch 5, **dadurch gekennzeichnet, dass** der Kopf des Stifts (30) auf der Unterseite eine ringförmige Aushöhlung umfasst, in die der kreisförmige Wulst (42) eingepasst wird.

7. Rad nach einem der vorstehenden Ansprüche, **dadurch gekennzeichnet, dass** es Anordnungen umfasst, die jeweils aus einem Paar Stifte (20), die aneinander angenähert sind, gebildet werden, wobei diese Anordnungen auf gleichmäßige Weise um den Umfang des Rads verteilt sind.

8. Rad nach einem der vorstehenden Ansprüche, **dadurch gekennzeichnet, dass** das Aluminiumblech (4) der Felge (2), das die Befestigung des Kranzes (10) aufnimmt, einen zylindrischen Felgenboden bildet, der den kleinsten Durchmesser der Felge aufweist.

9. Verfahren zur Produktion eines Rads für ein Kraftfahrzeug, umfassend eine in einem Aluminiumlegierungsblech hergestellte Felge (2), die am Umfang eines in einem Stahlblech hergestellten Kranzes (10) über Montagen befestigt ist, die die beiden Bleche (4, 18) verbinden, die sich überlagern, **dadurch gekennzeichnet, dass** bei einem Zyklus, der unterschiedliche Drucke und Drehzahlen eines Stahlstifts (20) umfasst, in einem ersten Schritt eine vordere Spitze (38) dieses Stifts (20) auf das Aluminiumblech (4) gedrückt wird, um dieses Blech zu durchbohren, in einem folgenden Schritt die vordere Spitze (38) auf das Stahlblech des Kranzes (18) gedrückt wird, um eine plastische Verformung dieses Blechs zu bilden, die sich an die Endform dieser Spitze anpasst, und in einem folgenden Schritt die Spitze des Stifts (38) durch Reibung auf das Stahlblech des Kranzes (18) geschweißt wird.

10. Kraftfahrzeug, das Räder umfasst, **dadurch gekennzeichnet, dass** diese Räder nach einem der Ansprüche 1 bis 8 sind.

## Claims

1. Wheel intended for a motor vehicle, having a rim (2) made of a sheet of aluminium alloy that is fastened to the contour of a wheel disc (10) made from a steel sheet by assemblies that connect the aluminium sheet of the rim (4) and the steel sheet of the wheel disc (18), which overlap one another, **characterised in that** the assemblies comprise connecting pins (20) that have a tip (38) that passes through a hole in the aluminium sheet (4) of the rim (2), the front end of which is welded to the steel sheet of the wheel disc (18), and a rear head (30) that presses against the aluminium sheet (4) about said hole.

2. Wheel according to claim 1, **characterised in that** the head of the pins (30) has, on its contour, notches (34) enabling it to be rotated.

3. Wheel according to claim 2, **characterised in that** the notches (34) have shapes (36) enabling a driving by a tool in one single rotational direction.

4. Wheel according to any one of the preceding claims, **characterised in that** the end of the tips of the pins (38) is curved.

5. Wheel according to any one of the preceding claims, **characterised in that** the aluminium sheet (4) forms about the tip of the pin (38), a circular protrusion (42) exceeding above this sheet.

6. Wheel according to claim 5, **characterised in that** the head of the pin (30) has an annular cavity below, wherein the circular protrusion (42) is adjusted.

7. Wheel according to any one of the preceding claims, **characterised in that** it comprises assemblies each formed by a pair of pins (20) close to one another, these assemblies being distributed regularly over the contour of the wheel.

8. Wheel according to any one of the preceding claims, **characterised in that** the aluminium sheet (4) of the rim (2) receiving the fastening of the wheel disc (10), forms a cylindrical rim bottom having the smallest diameter of the rim.

9. Method for manufacturing a wheel for a motor vehicle, having a rim (2) made of a sheet of aluminium alloy that is fastened to the contour of a wheel disc (10) made from a steel sheet by assemblies that connect the two sheets (4, 18) which overlap one another, **characterised in that** with a cycle having different pressures and rotational speeds of a steel pin (20), in a first step, a front tip (38) of this pin (20) is pressed on the aluminium sheet (4) to pierce this sheet, in a following step, the front tip (38) is pressed on the steel sheet of the wheel disc (18) to make a plastic deformation of this sheet being adapted to the end shape of this tip, and in a following step, the tip of the pin (38) is welded by friction on the steel sheet of the wheel disc (18).

10. Motor vehicle having wheels, **characterised in that** these wheels are according to any one of claims 1 to 8.
